(19) Europäisches Patentamt
European Patent Office
Office européen des brevets

(11) Publication number: **0 124 935**
**B1**

(12) # EUROPEAN PATENT SPECIFICATION

(45) Date of publication of patent specification: **07.09.88**

(51) Int. Cl.$^4$: **C 08 B 9/00**

(21) Application number: **84200600.9**

(22) Date of filing: **02.05.84**

(54) **Method for improving the filterability of a viscose solution.**

(30) Priority: **05.05.83 SE 8302564**

(43) Date of publication of application:
**14.11.84 Bulletin 84/46**

(45) Publication of the grant of the patent:
**07.09.88 Bulletin 88/36**

(84) Designated Contracting States:
**AT DE GB NL**

(58) References cited:
**CH-A- 342 329**
**DE-B-1 176 633**
**GB-A- 820 274**
**SE-A-1 238 166**
**US-A-2 792 313**

(73) Proprietor: **BEROL KEMI AB**
**Box 851**
**S-444 01 Stenungsund 1 (SE)**

(72) Inventor: **Alvryd, Karl Bertil Gunnar**
**Stensörevägen 6**
**S-444 00 Stenungsund (SE)**
Inventor: **Elsby, Leif Edmund**
**Uppegardsvägen 25**
**S-444 00 Stenungsund (SE)**
Inventor: **Uneback, Hans Ingemar**
**Starrkärr 13536**
**S-444 05 Ödsmal (SE)**

(74) Representative: **Andersson, Rolf**
**BEROL KEMI AB Box 851**
**S-444 01 Stenungsund (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 124 935 B1

**Description**

The present invention relates to a method for improving the filterability of a viscose solution by adding an ester compound containing alkyleneoxy units.

When preparing a viscose it is important to add, at a suitable point in the process, an agent which improves the filterability of the viscose solution. Improved filterability is obtained by the ability of the agent to reduce the formation of gel particles in the viscose solution. As an additional effect, certain, specially suitable agents provide fibers or films with less milkiness and higher brightness.

From the German Patent 1 176 633, the US patent 2 792 313, and the British patent 1.271.118 it is known that the addition of different alkylene oxide adducts improves the filterability of viscose solutions, but the effects obtained are usually relatively limited. The addition to the viscose solution of polyalkylene oxides, polyaminepolyglycolethers, ethoxylated polyalcohols or ethoxylated castor oils as swelling-decreasing and modifying agents is described in the German patent 1.185.331. However, these additions have no or only a minor effect on the filterability of the viscose solution.

According to the present invention it has now proved possible to prepare a viscose solution with very good filterability by the addition, prior to the xanthation, of certain types of esters containing alkyleneoxy units. The effects of these compounds are essentially higher than the effect that can be expected compared with the effect of the hydroxylic compound and the carboxylic compound which together form the compounds according to the present invention. Further, the method according to the invention is suitable for application to all types of chemical pulp used in the manufacture of viscose. Cellulose pulps of both sulphite and sulphate type, viscose pulps and high yield pulps (with low alfa-cellulose content), and pulps from different fiber raw materials may well be used. Cellulose pulps with resin contents from 0.002 to 0.5% by weight can suitably be used in the method according to the invention.

The aim of the invention is achieved by adding during the preparation of viscose solution but before the xanthation 0.01—1.0%, preferably 0.05—0.5%, calculated on the weight of the pulp, of a compound with the general formula

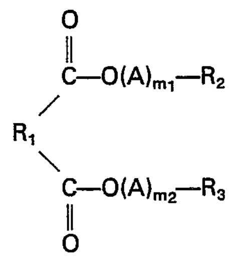

I

where $R_1$ is a hydrocarbon group with up to 20, preferably 2—20 carbon atoms; A is an alkyleneoxy unit derived from alkylene oxide with 2—4 carbon atoms, provided that at least 50% of the number of the alkyleneoxy units are ethyleneoxy units; $m_1$ and $m_2$ are numbers from 0 to 30, the total of $m_1+m_2$ being 2—60; $R_2$ and $R_3$ are hydrocarbon groups with 1—24 carbon atoms or hydrogen provided that $R_2$ and $R_3$ are not simultaneously hydrogen, or

$$R_4[O(A)_{m_3}R_5]_n \qquad \text{II}$$

where $R_4$ is an aliphatic group with 2—24 carbon atoms and 0—2 nitrogen atoms; $R_5$ is an acyl group with 1—24 carbon atoms or hydrogen, provided that all at least two $R_5$ groups are not hydrogen; $m_3$ is a number from 0 to 30, the total of all $m_3$ being a number from 2 to 100; n is a number from 2 to 6, and A has the meaning given in formula I. The numbers of $m_1$, $m_2$, and $m_3$ are average numbers.

Preferred compounds with the formula I are those where $R_1$ is a hydrocarbon group with 2—6 carbon atoms such as the phenylene group, A consists of at least 75% ethyleneoxy units, the total of $m_1$ and $m_2$ is 8—45, and most preferred 15—40, and $R_2$ and $R_3$ are hydrocarbon groups of 4-12 carbon atoms.

Of the compounds with the formula II the ones are preferred where $R_4$ is an aliphatic group with 2—12 carbon atoms and 0—1 nitrogen atoms, $R_5$ is an acyl group with 2—22 carbon atoms, the total of all $m_3$ is a number from 8 to 50, n is a number 2—4 and A consists of at least 75% ethyleneoxy units.

The compound comprised by the method according to the invention can all be produced according to methods known per se. Thus, the compound I can be produced by the alkoxylation of the compound $R_2OH$ and/or $R_3OH$, $R_2$ and $R_3$ having the above meaning, with a suitable amount of akylene oxide with 2—4 carbon atoms, and esterification of the alkylene oxide adduct obtained with a dicarboxylic acid with the formula

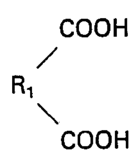

where $R_1$ has the above meaning.

Examples of suitable compounds with the formula $R_2OH$ or $R_3OH$ are hexanol, octanol, such as 2-ethylhexanol, decanol, dodecanol, tetradecanol and hexadecanol and isomers thereof as well as phenol and substituted phenols. Examples of suitable dicarboxylic acids are oxalic acid, fumaric acid, maleic acid, adipic acid, phthalic acid, isophthalic acid and terephthalic acid.

Compounds with the formula II can be produced in a similar manner. First a hydroxylic compound $R_4(OH)_n$ can be alkoxylated with a suitable amount of alkylene oxide, and then the alkylene oxide adduct obtained can be reacted with a monocarboxylic acid having the formula $R_5OH$, where $R_5$ has the above meaning, to form the desired compound II.

Examples of suitable hydroxylic compounds are diethanolamine, triethanolamine, ethylenediamine, monoethylglycol, glycerol, trimethylolpropane and monosaccarides. Examples of suitable monocarboxylic acids are lauric acid, palmitic acid, stearic acid, oleic acid, linolic acid, linolenic acid, 2-ethylhexanoic acid, butyric acid, valeric acid, caproic acid, caprylic acid and capric acid.

As earlier mentioned, the compounds comprised by the method according to the invention should be added at the latest immediately prior to the beginning of the xanthation. Preferably the compounds are added during the mercerization or to the wet pulp web on the formation machine before the drying section from a water solution or, if the product is soluble also without dilution, by spraying, or by means of rotating rolls or any other mechanical devices. The addition can also be made to the dried pulp or to the alkali cellulose in the xanthation apparatus prior to the xanthation. The effect will fully or almost disappear if the compounds are added in connection with or after the xanthation. All compounds comprised by the method according to the invention have ester structure. This means that they will be, at least partly, hydrolyzed in the alkaline conditions prevailing during the mercerization.

The following Examples illustrate the invention. All percentages in the Examples are by weight if nothing else is stated.

## Example 1

A soft-wood pulp with 94% alfa-cellulose produced according to the sulphate method and with a resin content of 0.01% was used when preparing the viscose. The pulp was mercerized in a NaOH-solution of 18% at 53°C according to the slurry method and with an addition of 2 kg, calculated per ton of pulp, of filterability improving agents according to Table 1. A blind test was also carried out in order to determine the effects of the agents. After the removal of excess caustic liquor by pressing and ageing an alkali cellulose with 33% cellulose content and 15% NaOH was obtained. Carbon disulphide was added at two levels, i.e. at 29.5% and 32% respectively, calculated on the cellulose content in the alkali cellulose. The formed xanthate was dissolved in the NaOH-solution so that a viscose with a 10% cellulose content and 5.8% NaOH were received. The dissolving took place at 4°C during three hours.

For the viscose solutions obtained the $k_w$-value (clogging value) was determined. This value derives from the filtration time and filtrate weight of viscose solutions filtrated during normal conditions. The lower value for $k_w$, the better filterability for the viscose solution. The clogging value $k_w$ can be characterized as follows:

| $k_w$ | Filterability |
|---|---|
| 0—100 | excellent |
| 100—200 | very good |
| 200—400 | good |
| 400—800 | acceptable |
| 800—1500 | bad |
| >1500 | very bad |

The filterability improving agents tested according to this example gave the following result:

TABLE 1

| Test | Agent | $k_w$ | |
|---|---|---|---|
| | | 29.5% $CS_2$ | 32% $CS_2$ |
| A | 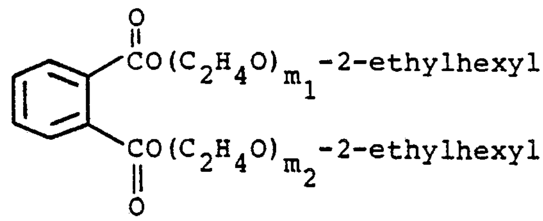<br>where $m_1 + m_2 = 30$ | 150 | 83 |
| B | 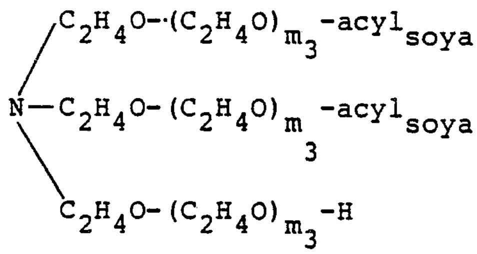<br>where the total of $m_3$ is 20 | * | 100 |
| C | 90% 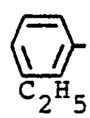 $-O(C_2H_4O)_{15}H$<br>10% $C_2H_5OC_2H_4O(C_2H_4O)_{13}H$<br>(according to British patent 1.271.118) | 500 | 300 |
| D | Blind test | 3000 | 1000 |

*not performed

The results show that the compounds according to the invention, i.e. the compounds in tests A—B have excellent or very good filterability improving properties. They are both clearly superior to the comparison product.

Example 2

A soft-wood pulp with 92% alfa-cellulose produced according to the sulphite method and with a resin content of 0.2% was used when preparing the viscose. The pulp was mercerized in a NaOH-solution with a concentration of 215 g/l at a temperature of 50°C according to the slurry method. The NaOH-solution contained also 35 g/l hemicellulose. Thereafter 2 kg per ton cellulose of the filterability improving compounds mentioned in Table 1 was added. After pressing and ageing an alkali cellulose with 33% cellulose and 15% NaOH was obtained. Carbon disulphide was added at two levels, at 28% and 32% respectively calculated on the cellulose in the alkali cellulose. The formed xanthate was dissolved in a NaOH-solution at +10°C so that a viscose with 10% cellulose and 6% NaOH was received.

The filterability was determined as $FZ_{60}$-values according to Zell Cheming Merkblatt III/6/68. The FZ-values were correlated to a falling-ball viscosity of 60 sec. and are therefore denoted by $FZ_{60}$. The lower $FZ_{60}$-values the better filterability for the viscose. $FZ_{60}$ can be characterized in the following manner.

| FZ60 | Filterability |
|---|---|
| 70 | Excellent |
| 70—100 | Very good |
| 100—150 | Good |

The following results were obtained:

TABLE 2

| Test | Agent | $k_w$ 28% $CS_2$ | 32% $CS_2$ |
|---|---|---|---|
| A | 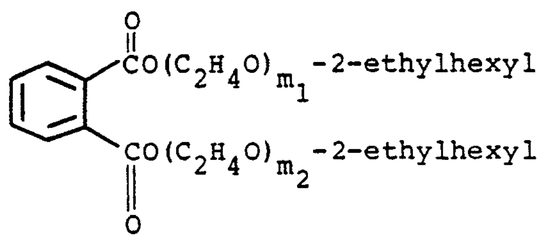 where $m_1 + m_2 = 30$ | 95 | 76 |
| B | 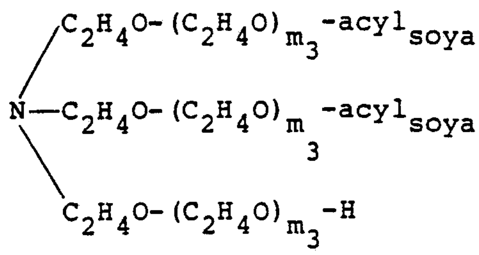 where the total of $m_3$ is 5 | 98 | 87 |
| C | 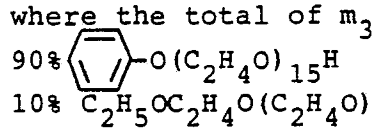 10% $C_2H_5OC_2H_4O(C_2H_4O)_{13}H$ (according to British patent 1.271.118) | 105 | 89 |
| D | Blind test | 123 | 96 |

From the results it is evident that the compounds in the tests A and B give a viscose with considerably improved filterability than the comparison product in test C.

Example 3

A softwood pulp with 85% alfa-cellulose produced according to the sulphite method and with a resin content of about 0.4% was used when preparing the viscose. The pulp was mercerized in a NaOH-solution of 18%, which also contained 35 g/l hemicellulose, at a temperature of 40°C according to the slurry method. An addition of the filterability improving compound in example 1, test A, in the amount of 2 kg/ton cellulose was made. For comparison also a blind test was carried out. After pressing an alkali cellulose with 33% cellulose and 15% NaOH was obtained. Carbon disulphide was added at 36% calculated on the cellulose in the alkali cellulose. The formed xanthate was dissolved in a NaOH-solution at +10°C so that a viscose with 9% cellulose and 5% NaOH was obtained. The filterability for the viscose solutions obtained was determined as $k_w$-values. The viscose solution prepared according to the invention showed a $k_w$-value of 100, while the viscose solution prepared without the addition of any filterability improving agent showed a $k_w$ of 300.

## Claims

1. Method for improving the filterability of a viscose solution by the addition of a filterability improving compound, characterized in that as the filterability improving agent, a compound is added, prior to the xanthation, in an amount of 0.01—1.0% by weight calculated on the weight of the cellulose, which compound had the general formula

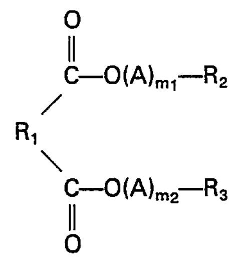

I

where $R_1$ is a hydrocarbon group with up to 20 carbon atoms; A is an alkyleneoxy group derived from alkylene oxide with 2—4 carbon atoms, provided that at least 50% of the number of the alkyleneoxy units are ethyleneoxy units; $m_1$ and $m_2$ are numbers from 0 to 30, the total of $m_1+m_2$ being 2—60; $R_2$ and $R_3$ are hydrocarbon groups with 1—24 carbon atoms or hydrogen, provided that $R_2$ and $R_3$ are not simultaneously hydrogen, or a compound with the general formula

$$R_4[O(A)_{m_3}R_5]_n \qquad II$$

where $R_4$ is an aliphatic group with 2—24 carbon atoms and 0—2 nitrogen atoms; $R_5$ is an acyl group with 1—24 carbon atoms or hydrogen, provided that at least two $R_5$ groups are not hydrogen; $m_3$ is a number from 0 to 30, the total of all $m_3$ being a number from 2 to 100; n is a number from 2 to 6 and A has the meaning given in formula I.

2. Method according to claim 1, characterized in that the filterability improving compound is a compound I, where $R_1$ is a hydrocarbon group with 2—6 carbon atoms, A consists of at least 75% ethyleneoxy units, the total of $m_1$ and $m_2$ is 8—45, and $R_2$ and $R_3$ is a hydrocarbon group of 4—12 carbon atoms.

3. Method according to claim 1, characterized in that the filterability improving compound is a compound II, where $R_4$ is an aliphatic group with 2—12 carbon atoms and 0—1 nitrogen atoms, $R_5$ is an acyl group with 2—22 carbon atoms, the total of all $m_3$ is a number from 8 to 50, n is a number 2—4, and A consists of at least 75% ethyleneoxy units.

## Patentansprüche

1. Verfahren zum Verbessern der Filtrierbarkeit einer Viskoselösung durch Zugabe einer die Filtrierbarkeit verbessernden Verbindung, dadurch gekennzeichnet, daß als das die Filtrierbarkeit verbessernde Mittel vor der Xanthogensäurereaktion eine Verbindung in einer Menge von 0,01 bis 1,0 Gew.-%, bezogen auf das Gewicht der Cellulose, zugefügt wird, die die allgemeine Formel

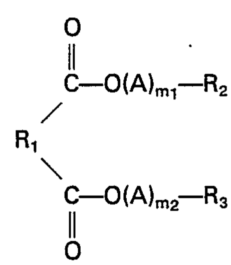

I

hat, worin $R_1$ eine Kohlenwasserstoffgruppe mit bis zu 20 Kohlenstoffatomen ist; A eine Alkylenoxygruppe ist, abgeleitet von einem Alkylenoxid mit 2 bis 4 Kohlenstoffatomen, vorausgesetzt, daß mindestens 50% der Anzahl der Alkylenoxyeinheiten Ethylenoxyeinheiten sind; $m_1$ und $m_2$ sind Zahlen von 0 bis 3, wobei die Summe von $m_1+m_2$=2 bis 60 ist; $R_2$ und $R_3$ sind Kohlenwasserstoffgruppen mit 1 bis 24 Kohlenstoffatomen oder Wasserstoff, vorausgesetzt, daß $R_2$ und $R_3$ nicht gleichzeitig Wasserstoff sind, oder die allgemeine Formel

$$R_4[O(A)_{m_3}R_5]_n \qquad II$$

hat, worin $R_4$ eine aliphatische Gruppe mit 2 bis 24 Kohlenstoffatomen und 0 bis 2 Stickstoffatomen ist; $R_5$

eine Acylgruppe mit 1 bis 24 Kohlenstoffatomen oder Wasserstoff ist, vorausgesetzt, daß mindestens zwei $R_5$-Gruppen nicht Wasserstoff sind; $m_3$ ist eine Zahl von 0 bis 30, wobei die Summe aller Symbole $m_3$ eine Zahl von 2 bis 100 ist; n ist eine Zahl von 2 bis 6, und A hat die in Formel I angegebene Bedeutung.

2. Verfahren nach Anspruch 1, dadurch gekennzeichnet, daß die die Filtrierbarkeit verbessernde Verbindung eine Verbindung I ist, worin $R_1$ eine Kohlenwasserstoffgruppe mit 2 bis 6 Kohlenstoffatomen ist, A aus mindestens 75% Ethylenoxyeinheiten besteht, die Summe von $m_1$ und $m_2$=8 bis 45 ist und $R_2$ und $R_3$ eine Kohlenwasserstoffgruppe mit 4 bis 12 Kohlenstoffatomen sind.

3. Verfahren nach Anspruch 1, dadurch gekennzeichnet, daß die die Filtrierbarkeit verbessernde Verbindung eine Verbindung II ist, worin $R_4$ eine aliphatische Gruppe mit 2 bis 12 Kohlenstoffatomen und 0 bis 1 Stickstoffatom ist, $R_5$ eine Acylgruppe mit 2 bis 22 Kohlenstoffatomen ist, die Summe aller Symbole $m_3$ eine Zahl von 8 bis 50 ist, n eine Zahl von 2 bis 4 ist und A aus mindestens 75% Ethylenoxyeinheiten besteht.

**Revendications**

1. Procédé pour améliorer l'aptitude à la filtration d'une solution de viscose consistant à ajouter une composé auxiliaire de filtration, caractérisé en ce qu'on ajoute un composé, en tant qu'agent auxiliaire de filtration, avant la xanthation, à raison de 0,01 à 1,0% en poids, calculé sur la base du poids de la cellulose, ce composé répondant à la formule générale

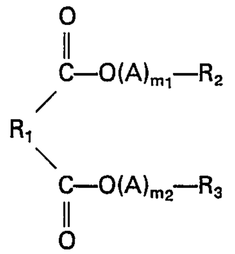

I

dans laquelle $R_1$ est un groupe hydrocarboné comportant jusqu'à 20 atomes de carbone; A est un groupe oxyalkylène dérivé d'un oxyde d'alkylène ayant 2 à 4 atomes de carbone, à condition qu'au moins 50% du nombre de motifs oxyalkylène soient des motifs oxyéthylène; $m_1$ et $m_2$ sont des nombres de 0 à 30, la somme $m_1+m_2$ étant de 2—60; $R_2$ et $R_3$ sont des groupes hydrocarbonés comportant 1—24 atomes de carbone ou des atomes d'hydrogène, à condition que $R_2$ et $R_3$ ne soient pas simultanément des atomes d'hydrogène, ou un composé répondant à la formule générale

$$R_4[O(A)_{m_3}R_5]_n \qquad II$$

dans laquelle $R_4$ est un groupe aliphatique comportant 2—24 atomes de carbone et 0—2 atomes d'azote; $R_5$ est un groupe acyle comportant 1—24 atomes de carbone ou un atome d'hydrogène, à condition qu'au moins deux des groupes $R_5$ ne soient pas des atomes d'hydrogène; $m_3$ est un nombre de 0 à 30, la somme de tous les $m_3$ étant un nombre de 2 à 100; n est un nombre de 2 à 6 et A a la signification donnée dans la formule 1.

2. Procédé selon la revendication 1, caractérisé en ce que le composé auxiliaire de filtration est un composé I, dans lequel $R_1$ est un groupe hydrocarboné comportant 2—6 atomes de carbone, A est constitué par au moins 75% de motifs oxyéthylène, la somme $m_1+m_2$ est de 8—45, et $R_2$ et $R_3$ représentent un groupe hydrocarboné de 4—12 atomes de carbone.

3. Procédé selon la revendication 1, caractérisé en ce que le composé auxiliaire de filtration est un composé II, dans lequel $R_4$ est un groupe aliphatique comportant 2—12 atomes de carbone et 0—1 atome d'azote, $R_5$ est un groupe acyle comportant 2—22 atomes de carbone, la somme de tous les $m_3$ est un nombre de 8 à 50, n est un nombre de 2—4, et A est constitué d'au moins 75% de motifs oxyéthylène.